# EUROPEAN PATENT SPECIFICATION

(11) **EP 1 677 647 B1**
(45) Date of publication and mention of the grant of the patent: **13.10.2010**
(21) Application number: 04728133.2
(22) Date of filing: 19.04.2004
(51) Int. Cl.: A47B 96/06, F16M 13/02, A47F 5/06, A47G 7/04, A47G 25/08

(54) **SUPPORT BRACKET**
STÜTZHALTERUNG
SUPPORT

(30) Priority: 29.04.2003 AU 2003902030
(43) Date of publication of application: 12.07.2006
(73) Proprietor: Cablestik PTY LTD, New South Wales 2477 (US)
(72) Inventor: NANKERVIS, Peter, Bruce, Alstonville, New South Wales 2477 (AU)
(74) Representative: Sherrard-Smith, Hugh
(86) International application number: PCT/AU2004/000510
(87) International publication number: WO 2004/095983

(56) References cited:
- WO-A-95/14372
- AU-B- 677 359
- AU-B1- 752 963
- DE-U1- 8 801 422
- DE-U1- 8 911 958
- FR-A- 658 105
- FR-A- 1 400 561
- GB-A- 934 767
- US-A- 1 834 775
- US-A- 2 765 999
- US-A- 3 368 784
- US-A- 4 167 255
- US-A- 4 172 579
- US-A- 4 969 620
- US-A- 5 443 234
- US-A1- 2003 122 052

## Description

The present invention relates generally to brackets for supporting articles. One particular application of the invention concerns the support of cable drums and as a matter of convenience the invention will be hereinafter described with reference to that particular application. It is to be understood however that the bracket of the present invention can be used to support other articles.

During the construction of buildings, electric cables need to be laid at desired locations throughout the building. Usually such electric cables are supplied on cable drums from which selected lengths of cable can be taken. This can be a cumbersome process particularly where there is only one person available for laying of the cables.

US 4167255 discloses a clamp bracket for removably mounting on a building stud. An end includes a channel-shaped portion and an elongate pivot arm is pivotally connected to the end.

It is an object of the present invention to provide an improved bracket suitable for supporting articles such as for example, cable drums.

According to one aspect of the present invention there is provided an article support bracket arranged, in use, to be releasably mountable to a structural member, the bracket including a support section in the form of an elongated arm for receiving the article and a releasable mounting means operatively connected to the supports section, the releasable mounting means arranged, in use, to be secured to the structural member in a mounted position and, when in that mounted position, the support section is in a selected orientation relative to the structural member characterised in that the releasable mounting means includes a hook shaped element operatively connected to one end of the arm, the hook shaped element being pivotally movable movement relative to the arm between a fitting position in which, in use, it is presented to the structural member and the mounted position in which the bracket is connected to the structural member, and return of the hook shaped element to the fitting position from the mounted position enables release of the bracket from the structural member and in that the releasable mounting means further includes a pair of spaced apart locating flanges forming a channel shaped configuration arranged, in use, to receive the structural member within the channel shaped configuration when in the mounted position with the hook shaped element extending at least partially around the structural member and the locating flanges facing a mouth of the hook shaped element.

The support section may be in the form of an elongated arm with the mounting means being disposed at one end portion thereof, the elongated arm being arranged, in use, to extend away from the structural member when the mounting means is connected to the structural member in the mounted position.

The elongated arm may include one or more stops thereon for limiting movement of the article along the arm when carried thereon. Preferably, the or each stop is in the form of a pin. Where two stops are provided these are spaced apart.

The structural member may be in the form of a generally upright post and when the bracket is connected to the post in the mounted position the elongated arm is disposed generally horizontally and extends from the post.

Preferably, the hook shaped element is adapted to be pivotally mounted at selected pivot mountings along the length of the arm at said end portion to allow for the fitting of the brackets to posts of different cross sectional dimensions.

In another embodiment the releasable mounting means may include a pair of spaced apart flanges extending from one end of the arm which when in the mounted position the post is disposed between the flanges with the free ends of each flange extending beyond the post, each flange including a mounting aperture in its free end portion for receiving a mounting pin.

According to another aspect of the present invention there is provided an article support bracket as described above in either its broad or more particular form and a portable structure member, the structural member including a post and a base, the post being operatively connected to the base, said article support bracket being releasably connectible to the post in the mounted position.

In one form the base may include a mounting adapted to be supported on a ball of a tow bar assembly of a vehicle. In another form the base may include a foldable leg assembly movable between an operative position in which it can support the post for receiving the support bracket and a collapsed position.

According to another aspect of the present invention there is provided an article support device including a post, a base, said post being operatively connected to said base and a support bracket as herein defined operatively connected to the post for pivotal movement between an operative position in which it extends away from the post and can receive an article thereon and a stored position in which it is disposed adjacent the post.

Preferably the base includes a foldable leg assembly movable between an operative position in which it can support the post and a collapsed position.

Preferred embodiments of the invention will be hereinbefore described with reference to the accompanying drawings, and in those drawings:
Figure 1 is a side elevation of a bracket according to one embodiment of the present invention;
Figure 2 is a plan view of the bracket shown in Figure 1;
Figure 3 is a schematic view of the bracket shown in a mounted position;
Figures 4 and 5 are detailed views of the bracket shown in Figures 1 to 3;
Figure 6 is a schematic view of a bracket according to a further embodiment of the present invention;
Figure 7 is a schematic illustration of a further application of the present invention; Figures 8 and 9 are schematic views of an attachment for use with a bracket according to the present invention;
Figure 10 is a schematic view of a further attachment for use with the bracket according to the present invention;
Figure 11 is a schematic illustration of a further embodiment according to another aspect of the invention; and
Figure 12 is a partial view of a modification of the embodiment shown in Figure 11.

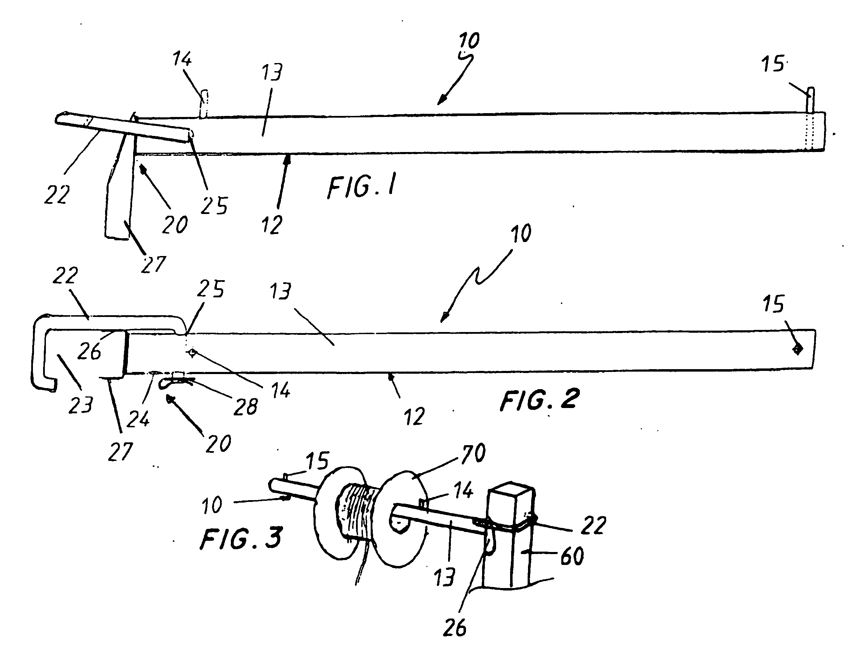

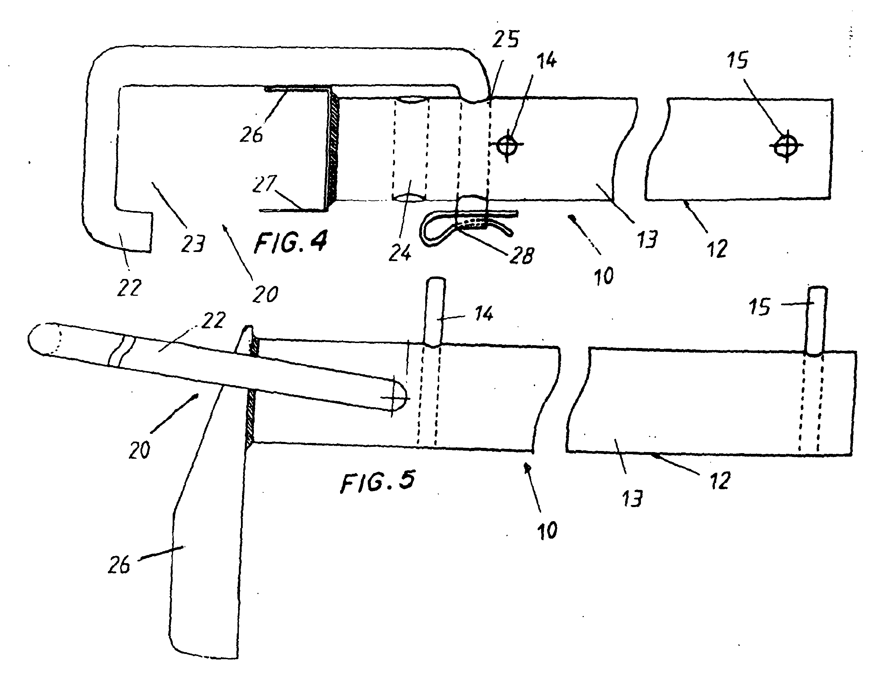

Referring in particular to Figures 1 to 5 there is shown a bracket generally indicated at 10 which can be releasably secured to a structural member such as a wall frame stud 60 (Figure 3). The bracket comprises a support section 12 in the form of an elongated rod shaped arm 13. In the form shown the arm includes locating pins 14 and 15 thereon between which an article to be carried by the bracket can be positioned. In another form the inner pin 14 is omitted and the article is located between the outer pin 15 and the stud 60. The article may be in the form of a cable drum 70 as shown in Figure 3.

The bracket 10 further includes releasably retaining means 20 which includes a hook shaped element 22 having a mouth 23 with the hook shaped element 22 being pivotally mounted to the arm 13. As shown the hook shaped element can be pivotally mounted at either pivot mounting 24 or pivot mounting 25 so that it can be adapted for use with different sized structural member. The hook shaped element 22 is retained in position by means of spring clip 28. The retaining means 20 further includes spaced apart locating flanges 26, 27 which form a channel which faces the mouth of the hook shaped element.

As illustrated in Figure 3, the bracket 10 can be mounted to a structural member which may for example be a wall frame stud 60 and in the application shown in Figure 3, the bracket is adapted to support a cable drum 70 thereon. The bracket is fitted by locating the hook shaped element around the stud 60 with the flanges having the other side of the stud positioned therebetween. Fitting of the clamp is effected by turning the arm 13 at 90° to the hook shaped member 22 whereby the hook shaped member can be appropriately located around the stud 60 whereafter the arm 13 can be pivotally returned to the position shown in Figure 3 and thereby be retained in a general horizontal position.

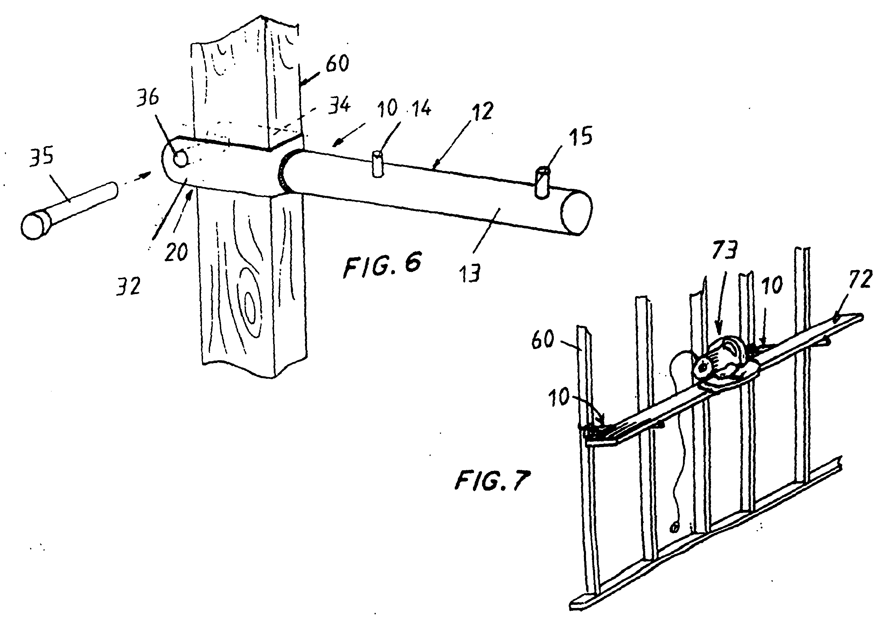

A further embodiment of clamp is shown in Figure 6 in this embodiment the clamp 10 is similar to the first embodiment in that it comprises a support section 12 in the form of an arm 13 having pins 14 and 15 thereon. In another form only a single outer pin 15 is provided there being no inner pin 14. In this embodiment the releasable retaining means 20 comprises a pair of spaced apart flanges 32 and 34 which can extend to either side of the wall frame stud 60 with the free ends thereof extending beyond the wall stud. Apertures 36 are provided in the portions of the flanges for receiving a locking pin 35.

As can be seen in Figure 7, the brackets can be used to support a platform 72 upon which tools such as power saw 73 or other equipment or articles can be carried.

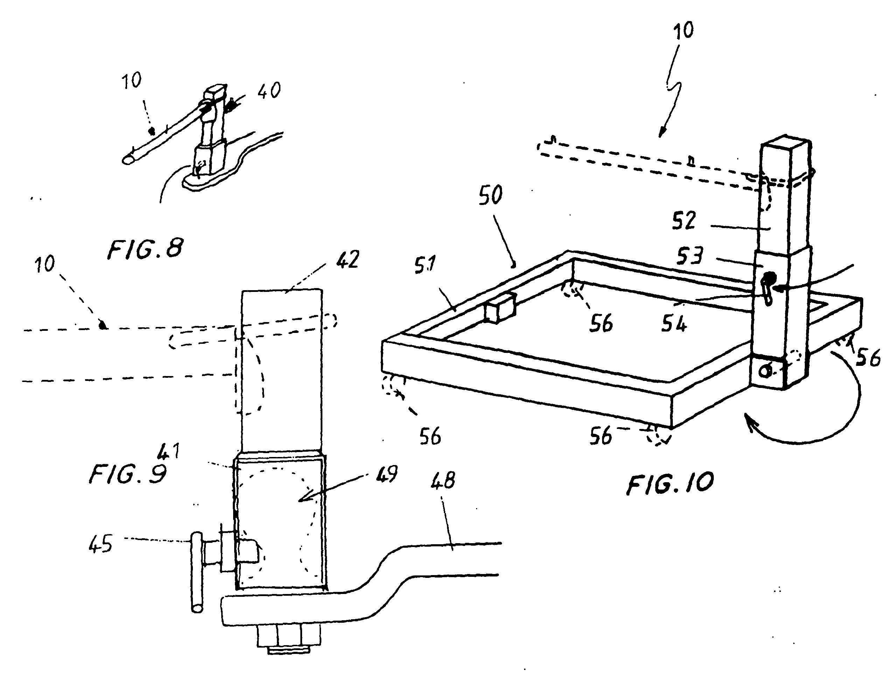

Figures 8 and 9 show an attachment which is suitable for use with the bracket 10, the attachment being adapted to be fitted to a vehicle tow bar 48 having a ball 49. The attachment includes a post 42 and a socket section 41 for receiving the ball 40 of the tow bar assembly. Locking nut 45 retains the post in position on the tow bar. The post in this embodiment forms the structural member to which the bracket is attached.

Figure 10 illustrates a further attachment in the form of a carriage comprising a base frame 51 having ground engaging wheels 56. The carriage 50 further includes a post mounting tube 53 which is pivotally mounted to the base frame 51 for receiving a structural member in the form of a post 52 therein, a locking nut 54 retains the post in position. The bracket 10 can be fitted to the post 52 in a manner described earlier.

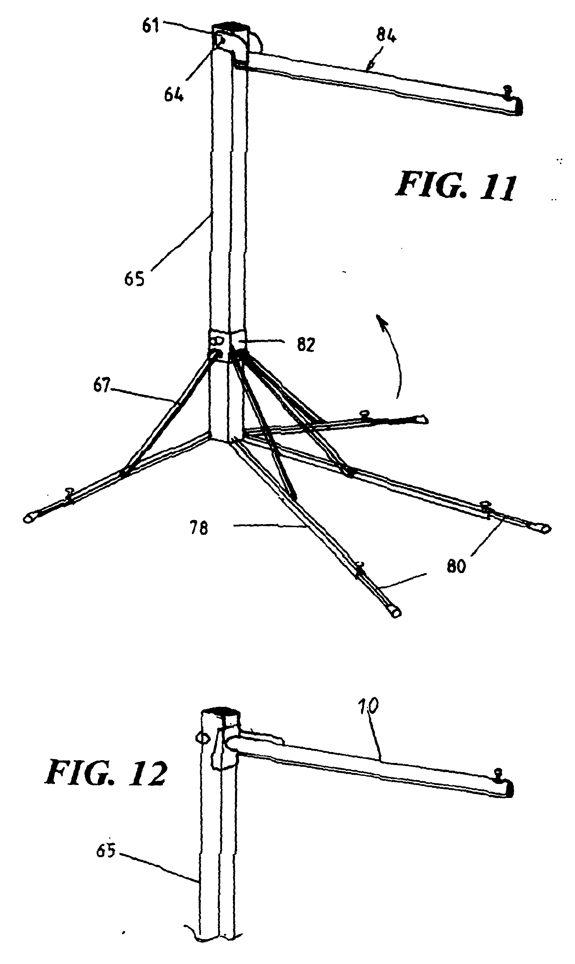

Referring to Figure 11 there is shown an article support device which includes a post 65 having a support arm 84 pivotally mounted thereto via pivot mounting 61 for pivotal movement about pivot point 64. The device further includes a base including foldable leg assembly which includes a sleeve 82 slidable along the post 65, a plurality of legs 78 connected to the sleeve 67 by connecting links 67. The legs 78 include extendable end sections 80.

Figure 12 shows part of the support device of Figure 11 except that support arm 84 has been replaced by support bracket 10 of the type described earlier.

Finally, it is to be understood that various alterations, modifications and/or additions may be incorporated into the various constructions and arrangements of parts without departing from the invention.

## Claims

1. An article support bracket (10) arranged, in use, to be releasably mountable to a structural member (60), the bracket (10) including a support section (12) in the form of an elongated arm (13) for receiving the article (70) and a releasable mounting means (20) operatively connected to the support section (12), the releasable mounting means (20) arranged, in use, to be secured to the structural member (60) in a mounted position and, when in that mounted position, the support section (12) is in a selected orientation relative to the structural member (60), the releasable mounting means (20) including a hook shaped element (22) operatively connected to one end of the arm (13), the hook shaped element (22) being pivotally movable movement relative to the arm (13) between a fitting position in which, in use, it is presented to the structural member (60) and the mounted position in which the bracket (10) is connected to the structural member (60), and return of the hook shaped element (22) to the fitting position from the mounted position enables release of the bracket (10) from the structural member (60) **characterised in that** the releasable mounting means (20) further includes a pair of spaced apart locating flanges (26, 27) forming a channel shaped configuration arranged, in use, to receive the structural member (60) within the channel shaped configuration when in the mounted position with the hook shaped element (22) extending at least partially around the structural member (60) and with the locating flanges (26,27) facing a mouth of the hook shaped element (22).

2. A. bracket according to claim 1 wherein said mounting means (20) is disposed at one end portion of the arm (13), the elongated arm (13) being arranged, in use, to extend away from the structural member when the mounting means (20) is connected to the structural member (60) in the mounted position.

3. A bracket according to claim 2 wherein the elongated arm (13) includes one or more stops (14, 15) thereon for limiting movement of the article (70) along the arm (13) when carried thereon.

4. A bracket according to claim 3 wherein the or each stop (14, 15) is in the form of an upstanding spaced apart pin.

5. A bracket according to any preceding claim further comprising a structural member (60), the structural member being in the form of a generally upright post (60) and when the bracket (10) is connected to the post (60) in the mounted position the elongated arm (13) is disposed generally horizontally and extends from the post.

6. A bracket according to claim 5 wherein the hook shaped element is pivotally mountable at selected pivot mountings (24, 25) along the length of the arm (13) at said end portion to allow for the fitting of the brackets to posts of different cross sectional dimensions.

7. An article support bracket according to claims 5-6 wherein the structural member is a portable structure member, the structural member including a post (42, 65) and a base (41, 53, 82); the post being operatively connected to the base, said article support bracket (10) being releasably connectable to the post in the mounted position.

8. The bracket and structural member of claim 7 wherein said base (41) includes a mounting adapted to be supported on a ball (49) of a tow bar assembly (48) of a vehicle.

9. The bracket and structural member of claim 7 wherein said base (53) includes a frame (51) having ground engaging wheels (56) enabling the structural member to be moved over a support surface.

10. The bracket and structural member of claim 7 wherein said base (82) includes a foldable leg assembly (78) movable between an operative position in which it can support the post (65) for receiving the support bracket (10) and a collapsed position.

## Patentansprüche

1. Stützhalterung (10) für einen Artikel, die derart ausgebildet ist, dass sie während des Gebrauchs lösbar an einem Strukturelement (60) montierbar ist, wobei die Halterung (10) einen Stützabschnitt (12) in Form eines verlängerten Arms (13) zum Aufnehmen des Artikels (70) und ein lösbares Montagemittel (20) umfasst, das betriebsfähig an den Stützabschnitt (12) angeschlossen ist, wobei das lösbare Montagemittel (20) ausgebildet ist, dass sie während des Gebrauchs an dem Strukturelement (60) in einer montierten Position gesichert zu sein und, wenn es sich in der montierten Position befindet, sich der Stützabschnitt (12) in einer ausgewählten Ausrichtung in Bezug auf das Strukturelement (60) befindet, wobei das lösbare Montagemittel (20) ein hakenförmiges Element (22) umfasst, das betriebsfähig an ein Ende des Arms (13) angeschlossen ist, wobei das hakenförmige Element (22) in Bezug auf den Arm (13) schwenkbar beweglich zwischen einer Einbaulage, in der es während des Gebrauchs dem Strukturelement (60) vorgelegt ist, und der montierten Position ist, in der die Halterung (10) mit dem Strukturelement (60) verbunden ist, und wobei die Rückkehr des hakenförmigen Elements (22) zur Einbaulage von der montierten Position das Lösen der Halterung (10) vom Strukturelement (60) ermöglicht, **dadurch gekennzeichnet, dass** das lösbare Montagemittel (20) überdies ein Paar beabstandete Führungsflansche (26, 27) umfasst, die eine kanalförmige Ausgestaltung bilden, die ausgebildet sind, während des Gebrauchs das Strukturelement (60) innerhalb der kanalförmigen Ausgestaltung aufzunehmen, wenn sie sich in der montierten Position befinden, wobei sich das hakenförmige Element (22) mindestens teilweise um das Strukturelement (60) erstreckt und wobei die Führungsflansche (26, 27) einer Öffnung des hakenförmigen Elements (22) zugewandt sind.

2. Halterung nach Anspruch 1, wobei das Montagemittel (20) an einem Endabschnitt des Arms (13) angeordnet ist, wobei der verlängerte Arm (13) ausgebildet ist, während des Gebrauchs von dem Strukturelement weg zu erstrecken, wenn das Montagemittel (20) mit dem Strukturelement (60) in der montierten Position verbunden ist.

3. Halterung nach Anspruch 2, wobei der verlängerte Arm (13) eine oder mehrere Stoppvorrichtungen (14, 15) zum Begrenzen der Bewegung des Artikels (70) entlang dem Arm (13), wenn er darauf getragen wird, umfasst.

4. Halterung nach Anspruch 3, wobei die oder jede Stoppvorrichtung (14,15) in Form eines aufrechten, beabstandeten Stifts vorliegt.

5. Halterung nach einem der vorhergehenden Ansprüche, überdies umfassend ein Strukturelement (60), wobei das Strukturelement in Form eines allgemein aufrechten Pfostens (60) vorliegt, und wenn die Halterung (10) in der montierten Position mit dem Pfosten (60) verbunden ist, der verlängerte Arm (13) im Allgemeinen horizontal angeordnet ist und sich von dem Pfosten weg erstreckt.

6. Halterung nach Anspruch 5, wobei das hakenförmige Element schwenkbar an ausgewählten Schwenkbefestigungspunkten (24, 25) entlang der Länge des Arms (13) an dem Endabschnitt montierbar ist, um den Einbau der Halterungen an Pfosten unterschiedlicher Querschnittsabmessungen zu ermöglichen.

7. Stützhalterung für einen Artikel nach Ansprüchen 5 bis 6, wobei das Strukturelement ein tragbares Strukturelement ist, wobei das Strukturelement einen Pfosten (42, 65) und eine Basis (41, 53, 82) umfasst, wobei der Pfosten betriebsfähig mit der Basis verbunden ist, wobei die Stützhalterung (10) für einen Artikel mit dem Pfosten in der montierten Position lösbar verbindbar ist.

8. Halterung und Strukturelement nach Anspruch 7, wobei die Basis (41) eine Befestigung umfasst, die angepasst ist, auf einer Kugel (49) einer Anhängerkupplungsbaugruppe (48) eines Fahrzeugs gelagert zu werden.

9. Halterung und Strukturelement nach Anspruch 7, wobei die Basis (53) einen Rahmen (51) umfasst, der in den Boden eingreifende Räder (56) aufweist, die ermöglichen, dass das Strukturelement über eine Auflagefläche bewegt werden kann.

10. Halterung und Strukturelement nach Anspruch 7, wobei die Basis (82) eine faltbare Schenkelbaugruppe (78) umfasst, die zwischen einer betriebsfähigen Position, in der sie den Pfosten (65) zum Aufnehmen der Stützhalterung (10) stützen kann, und einer zusammengefalteten Position bewegbar ist.

## Revendications

1. Console (10) pour le support d'un article, prévue pour, en utilisation, être montée de manière détachable sur un élément de structure (60), la console (10) comprenant une section de support (12) adoptant la forme d'un bras allongé (13) destiné à recevoir l'article (70) et un moyen de montage séparable (20) associé opérationnellement à la section de support (12), le moyen de montage séparable (20) étant prévu pour, en utilisation, être fixé à l'élément de structure (60) dans une position montée et, lorsqu'elle est dans cette position montée, la section de support (12) est dans une orientation choisie par rapport à l'élément de structure (60), le moyen de montage séparable (20) comprenant un élément (22) en forme de crochet associé opérationnellement à une extrémité du bras (13), l'élément (22) en forme de crochet étant mobile de manière pivotante par rapport au bras (13) entre une position d'installation dans laquelle, à l'utilisation, il est présenté à l'élément de structure (60), et la position montée dans laquelle la console (10) est réunie à l'élément de structure (60), et le retour de l'élément (22) en forme de crochet à la position d'installation à partir de la position montée permet la libération de la console (10) de l'élément de structure (60), ***caractérisée en ce que*** le moyen de montage séparable (20) comprend de plus une paire d'épaulements de positionnement espacés (26, 27) formant une configuration en U prévue pour, en utilisation, recevoir l'élément de structure (60) dans la configuration en U lorsqu'on est dans la position montée avec l'élément en forme de crochet (22) s'étendant au moins en partie autour de l'élément de structure (60) et avec les épaulements de positionnement (26, 27) faisant face à une bouche de l'élément en forme de crochet (22).

2. Console selon la revendication 1, dans laquelle ledit moyen de montage (20) est placé au niveau d'une portion d'extrémité du bras (13), le bras allongé (13) étant prévu pour, en utilisation, s'étendre en s'écartant de l'élément de structure lorsque le moyen de montage (20) est relié à l'élément de structure (60) dans la position montée.

3. Console selon la revendication 2, dans laquelle le bras allongé (13) comporte une ou plusieurs butées (14, 15) pour limiter le mouvement de l'article (70) le long du bras (13) lorsqu'il y est reçu.

4. Console selon la revendication 3, dans laquelle la, ou chaque, butée (14, 15) se présente sous la forme d'un ergot vertical espacé.

5. Console selon l'une quelconque des revendications précédentes, comprenant de plus un élément de structure (60), l'élément de structure prenant la forme d'un poteau globalement vertical (60) et, lorsque la console (10) est associée au poteau (60) dans la position montée, le bras allongé (13) est disposé globalement horizontalement et part du poteau.

6. Console selon la revendication 5, dans laquelle l'élément en forme de crochet est monté pivotant sur des fixations oscillantes (24, 25) placées sur la longueur du bras (13) au niveau de ladite portion d'extrémité pour permettre l'installation des consoles sur des poteaux de dimensions différentes en section transversale.

7. Console pour le support d'un article selon les revendications 5 et 6, dans laquelle l'élément de structure est un élément de structure portatif, l'élément de structure comprenant un poteau (42, 65) et une base (41, 53, 82), le poteau étant associé opérationnellement à la base, ladite console (10) pour le support d'un article étant reliée au poteau de manière séparable dans la position montée.

8. Console et élément de structure selon la revendication 7, dans lesquels ladite base (41) comprend une monture apte à être reçue sur une boule d'un ensemble barre de remorquage (48) d'un véhicule.

9. Console et élément de structure selon la revendication 7, dans lesquels ladite base (53) comprend un cadre (51) ayant des roues (56) en contact avec le sol permettant à l'élément de structure d'être déplacé sur une surface de support.

10. Console et élément de structure selon la revendication 7, dans lesquels ladite base (82) comprend un ensemble avec des pieds repliables (78), mobile entre une position opérationnelle dans laquelle il peut supporter le poteau (65) afin de recevoir la console de support (10) et une position repliée.
